# EUROPÄISCHE PATENTSCHRIFT

(11) **EP 0 761 498 B1**
(45) Veröffentlichungstag und Bekanntmachung des Hinweises auf die Patenterteilung: **08.11.2000**
(21) Anmeldenummer: 96112871.7
(22) Anmeldetag: 09.08.1996
(51) Int. Cl.: B60Q 1/30

(54) **Fahrzeugleuchte, insbesondere zusätzliche Bremsleuchte**
Vehicle lights particularly supplementary braking lights
Feux de véhicule en particulier feux de freinage supplémentaires

(30) Priorität: 26.08.1995 DE 19531404
(43) Veröffentlichungstag der Anmeldung: 12.03.1997
(73) Patentinhaber: Hella KG Hueck & Co., 59552 Lippstadt (DE)
(72) Erfinder: Franzbach, Theo, 59590 Geseke (DE)

(56) Entgegenhaltungen:
- EP-A- 0 653 328
- DE-U- 29 603 969
- US-A- 4 449 167

## Beschreibung

Die Erfindung bezieht sich auf eine Fahrzeugleuchte, insbesondere zusätzliche Bremsleuchte, welche mit Halteelementen an der Innenseite einer Heckscheibe eines Fahrzeuges anbringbar ist, mit einem flachen und langgestreckten Gehäuse, mit mindestens einer in dem Gehäuse angeordneten Lichtquelle, mit zwei an der Innenseite der Heckscheibe befestigbaren ersten Halteelementen, zwischen welchen das langgestreckte Gehäuse verläuft und mit welchen das Gehäuse quer zu seiner Längsausdehnung fügbar ist, wobei zwei zweite Halteelemente sowohl in mehreren Drehstellungen zu einer in Längsausdehnung des Gehäuses verlaufenden Achse in Richtung der Achse mit dem Gehäuse drehfest als auch zusammen mit dem Gehäuse quer zur Achse mit den ersten Halteelementen fügbar sind.

Eine solche Fahrzeugleuchte ist aus der EP 0 653 328 A2 bekannt. Die Fahrzeugleuchte ist von einer zusätzlichen Bremsleuchte gebildet, welche ein flaches und langgestrecktes Gehäuse aufweist. Das langgestreckte Gehäuse ist zwischen zwei zweiten Halteelementen angeordnet, zwischen welchen das Gehäuse in mehreren Drehstellungen zu einer in Längsausdehnung des Gehäuses verlaufenden Achse verstellbar ist und an den zweiten Halteelementen festsetzbar ist. Die zweiten Halteelemente erstrecken sich zur Innenseite einer Heckscheibe des Fahrzeugs hin und sind an der Heckscheibe mittels eines als Klebeband dienenden ersten Halteelements befestigt.

Aus der DE 40 35 639 C2 ist eine Fahrzeugleuchte bekannt, bei der in einem rinnenartig ausgeführten Gehäuse in einer Reihe nebeneinander mehrere Lichtquellen angeordnet sind. Als Lichtquellen dienen Glühlampen, welche jeweils in einen Reflektor einer Reflektorenleiste eingesetzt sind. Die Reflektorenleiste ist eng von dem rinnenartigen Gehäuse umgeben. Die obere Seitenwand des rinnenartigen Gehäuse ist in Lichtaustrittsrichtung wesentlich kürzer ausgeführt als die untere Seitenwand des Gehäuses.

Deshalb kann die Fahrzeugleuchte nach einem Anbringen an eine Innenseite einer Heckscheibe mit ihren vorderen Randabschnitten an die Innenseite der Heckscheibe angrenzen. Das rinnenartige Gehäuse ist an seinen beiden Endabschnitten mittels an die Innenseite der Heckscheibe anklebbaren Halteelementen, welche im Querschnitt doppel-T-förmig gestaltet sind anbringbar. Das rinnenartige Gehäuse ist mit dem an die Heckscheibe angeklebten Halteelement quer zu seiner Längsausdehnung gefügt. Das Gehäuse ist mit Längsschlitzen an seinen Endabschnitten auf die Halteelemente aufgeschoben, bis eine Rastnase des Gehäuses das Halteelement selbstrastend hintergreift. Damit das Gehäuse klapperfrei an dem Halteelement gehalten ist, ist zusätzlich eine Haltefeder notwendig, welche zwischen dem Gehäuse und dem Halteelement unter Vorspannung eingesetzt ist. Die Fahrzeugleuchte baut von ihrer Vorderseite her gesehen nicht wesentlich größer als ihre Reflektorenleiste bzw. eine die Reflektorenleiste abdeckende Lichtscheibe. Die Fahrzeugleuchte nimmt in Blickrichtung des Fahrers über den Innenspiegel nur so wenig Raum wie möglich ein. Nachteilig hierbei ist, daß die Fahrzeugleuchte nur bei einem Fahrzeug mit einer bestimmten Neigung der Heckscheibe verwendbar ist, da das Gehäuse der Leuchte genau zur Fahrzeugslängsachse ausgerichtet sein muß.

Aus der DE 30 17 405 A1 ist eine Fahrzeugleuchte bekanntgeworden, welche innerhalb eines topfförmigen Halteelementes einstellbar ist. Das topfförmige Halteelement weist an seinem vorderen Rand einen Rahmen auf, welcher an die Innenseite der Heckscheibe anklebbar ist. Das topfförmige Halteelement umgibt die verstellbare Leuchte mit einem großen Abstand, damit sie innerhalb des topfförmigen Aufnahmeteils vertikal einstellbar ist. Eine solche Leuchte nimmt in Blickrichtung des Fahrers einen großen Raum der Heckscheibe ein. Außerdem ist die Herstellung der Fahrzeugleuchte wegen dem sie aufnehmenden topfförmigen Halteelement kostenintensiv.

Aufgabe der Erfindung ist es, die im Obergriff des Anspruchs 1 beschriebene Fahrzeugleuchte derart zu gestalten, daß das mindestens eine Lichtquelle aufnehmende Gehäuse auch dann in mehreren vertikalen Schwenkstellungen an der Innenseite der Heckscheibe befestigbar ist, wenn deswegen das Gehäuse nicht größer bauen muß und die Halteelemente des Gehäuses weiterhin in ihrem Aufbau einfach gestaltet und leicht und schnell montiert werden können. Diese Aufgabe wird nach der Erfindung dadurch gelöst, daß die zwei zweiten Halteelemente (2) zusammen mit dem Gehäuse (4) quer zur Achse (5) mit den ersten Halteelementen (1) durch Befestigungselemente (17, 18) fügbar sind. Da die Fügerichtungen der zweiten Halteelemente zum Gehäuse hin quer zu der Fügerichtung zwischen den ersten und zweiten Halteelementen verläuft, sind die zweiten Halteelemente in Richtung der Achse durch die ersten Halteelemente gehaltert. Um ein Fügen der zweiten Halteelemente mit den an die Innenseite der Heckscheibe angeklebten ersten Halteelemente zu erleichtern, ist es vorteilhaft, wenn die zweiten Halteelemente in ihrer gewünschten Einstellposition mit Klebstoff an das Gehäuse angeheftet sind. Das Gehäuse kann nun, ohne die zweiten Halteelemente an dem Gehäuse in ihrer ausgerichteten Lage festhalten zu müssen, mit den ersten Halteelementen gefügt werden.

Die zweiten Halteelemente nehmen das Gehäuse stabil zwischen sich auf, wenn sie an den kurzen Seitenflächen des langgestreckten Gehäuses flächig anlegbar sind. Zudem müssen die zweiten Halteelemente nicht von dem Gehäuse störend abstehen.

Das Gehäuse ist auch bei im Fahrbetrieb auftretenden großen Vibrationen radial sicher an den Halteelementen gehalten, wenn die Achse jeweils durch eine erste Nut-Feder-Verbindung zwischen den zweiten Halteelementen und dem Gehäuse gebildet ist und wobei die erste Nut-Feder-Verbindung eine Drehhülse aufweist, welche mit einem Drehzapfen und einer den Drehzapfen umgebenden Vertiefung gefügt ist. Hierbei ist die Drehhülse radial nicht nur an dem Drehzapfen, sondern auch an einer Seitenfläche der Vertiefung gehalten.

In diesem Zusammenhang ist es weiterhin vorteilhaft, wenn in einem Abstand zur Achse zwischen dem zweiten Halteelement und dem Gehäuse eine zweite Nut-Feder-Verbindung besteht, welche die zweiten Halteelemente in ihrer jeweiligen Drehstellung drehfest mit dem Gehäuse verbindet. Dadurch ist ein selbsttätiges Verdrehen des Gehäuses um die in dem Gehäuse und dem zweiten Halteelemente gebildete Achse ausgeschlossen.

Zudem ist es vorteilhaft, wenn die Achse am oberen äußeren Randabschnitt des Gehäuses verläuft, während die zweite Nut-Feder-Verbindung unterhalb der Achse angeordnet ist. Dadurch grenzt der Randabschnitt des Gehäuses in jeder möglichen Einstellung des Gehäuse dicht an die Innenseite der Heckscheibe an. Bei einem zu großen Spalt zwischen dem oberen Randabschnitt des Gehäuses und der Innenseite der Heckscheibe könnten Lichtstrahlen den Dachhimmel des Fahrzeugs störend aufhellen.

Ein Einstellen des Gehäuses zu den zweiten Halteelementen ist leicht und schnell durchführbar, wenn die zweite Nut-Feder-Verbindung einen Nocken mit einer profilierten Seitenfläche aufweist, welche in jeder Drehstellung des zweiten Halteelementes in eine entsprechend profilierte Seitenfläche einer Öffnung eingreift. Außerdem ist eine solche Nut-Feder-Verbindung kostengünstig herstellbar.

Die Verbindung zwischen den ersten und zweiten Halteelementen muß keine störenden Kanten und Ecken aufweisen und kann einfach gestaltet sein, wenn das zweite Halteelement auf der der Heckscheibe zugewandten Seite ein geschlitztes Sackloch aufweist, welches sich zu seinem Boden hin verjüngt und ein stiftartiges Steckelement aufnimmt, welches klemmend in dem Sacklock festsetzbar ist. Hierbei ist es weiterhin zweckmäßig, wenn das stiftartige Steckelement an dem in Einsetzrichtung des Gehäuses gerichteten Endabschnitt mindestens eine Rastwarze aufweist, welche in eine Hinterschneidung des Sackloches selbstrastend eingreift und mit dem anderen Endabschnitt sich in Einsetzrichtung verjüngt. Dadurch kann, ohne ein zusätzliches Teil verwenden zu müssen, klapperfreier Sitz der zweiten Halteelemente an den ersten Halteelementen erreicht werden. Der klemmende Festsitz der zweiten Halteelemente an den ersten Haltelementen ist besonders groß, wenn das Sacklock des zweiten Halteelements und/oder das stiftartige Steckelement des ersten Halteelement in einem spitzen Winkel zur Einsetzrichtung des Gehäuses verläuft.

Bei einer besonders vorteilhaften Weiterbildung der Erfindung sind die ersten Halteelemente mit einem Klebstoff an der Innenseite der Heckscheibe befestigbar, wobei für den Klebstoff der Ort an der Innenseite der Heckscheibe mittels einer an die Heckscheibe anbringbaren Schablone festlegbar ist, welche mit zwei Freimachungen zur Aufnahme von Klebstoff und Haltefüßen der ersten Halteelemente versehen ist. Bei der Montage der Fahrzeugleuchte ist einem ersten Arbeitsschritt die Schablone an der Innenseite der Heckscheibe anzuhalten bzw. mittels einer Selbstklebefolie anzubringen. Die Schablone sollte aus einem biegsamen Streifen bestehen, dessen die Freimachungen aufweisenden Endabschnitte an die Heckscheibe anklebbar sind. Nach dem Ankleben der Schablone ist Klebstoff in die Freimachungen einzubringen, welche dann mit einem Spachtel abzuziehen ist. In einem weiteren Schritt sind die ersten Halteelemente mit ihren Haltefüßen in die jeweilige Freimachung einzusetzen. Die Halteelemente sind genau ausgerichtet, wenn die Abmessungen der Freimachungen den Außenabmessungen der Haltefüße entsprechen. Nach einem Abbinden des Klebstoffes ist die Schablone von der Heckscheibe abzuziehen.

Ein Ausführungsbeispiel nach der Erfindung ist in den Zeichnungen dargestellt, und zwar zeigen
- Figur 1: in einer Seitenansicht eine Fahrzeugleuchte, welche an eine Heckscheibe eines Fahrzeuges mit einer bestimmten Neigung angebracht ist und vertikal zur Neigung der Heckscheibe ausgerichtet ist;
- Figur 2: in einer Seitenansicht die Fahrzeugleuchte der Figur 1, welche an eine Heckscheibe mit einer anderen Neigung angebracht ist und entsprechend dieser Neigung ausgerichtet ist;
- Figur 3: eine Ansicht aus Richtung X in Figur 1;
- Figur 4: einen Schnitt nach der Linie A-A in Figur 2;
- Figur 5: einen Schnitt nach der Linie B-B in Figur 2;
- Figur 6: eine Ansicht aus Richtung Y nur auf ein Lichtquellen aufnehmendes Gehäuse in Figur 3;
- Figur 7: eine Einzelheit Z in Figur 6;

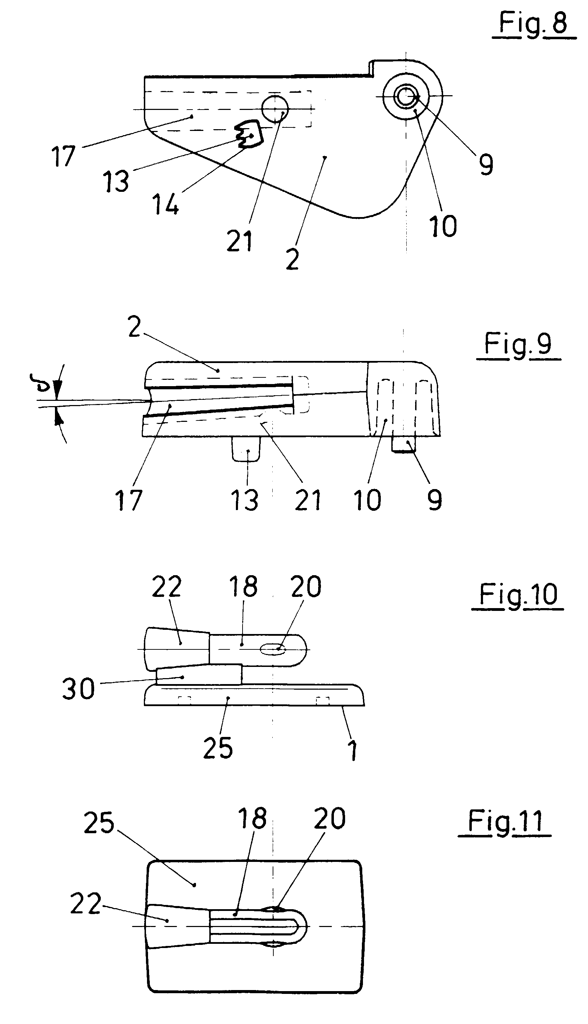

- Figur 8: eine Ansicht eines von zwei Halteelementen in Richtung auf die Seite, mit welcher das Halteelement an dem Gehäuse anliegt;
- Figur 9: eine Ansicht von oben des in Figur 8 dargestellten Halteelementes;
- Figur 10: einer Seitenansicht eines von zwei Halteelementen, welche an die Innenseite der Heckscheibe angeklebt sind;
- Figur 11: eine Ansicht des in Figur 10 dargestellten Halteelementes von oben und
- Figur 12: in einer Vorderansicht eine an der Innenseite der Heckscheibe anklebbare Schablone für die Montage der in den Figuren 10 und 11 dargestellten Halteelemente.

Bei der Fahrzeugleuchte handelt es sich um eine zusätzliche hochsetzbare Bremsleuchte für Fahrzeuge. Die Fahrzeugleuchte ist mittels zwei ersten und zwei zweiten Halteelementen (1, 2) an der Innenseite einer Heckscheibe (3) anklebbar und zu der Neigung der Heckscheibe (3) ausrichtbar.

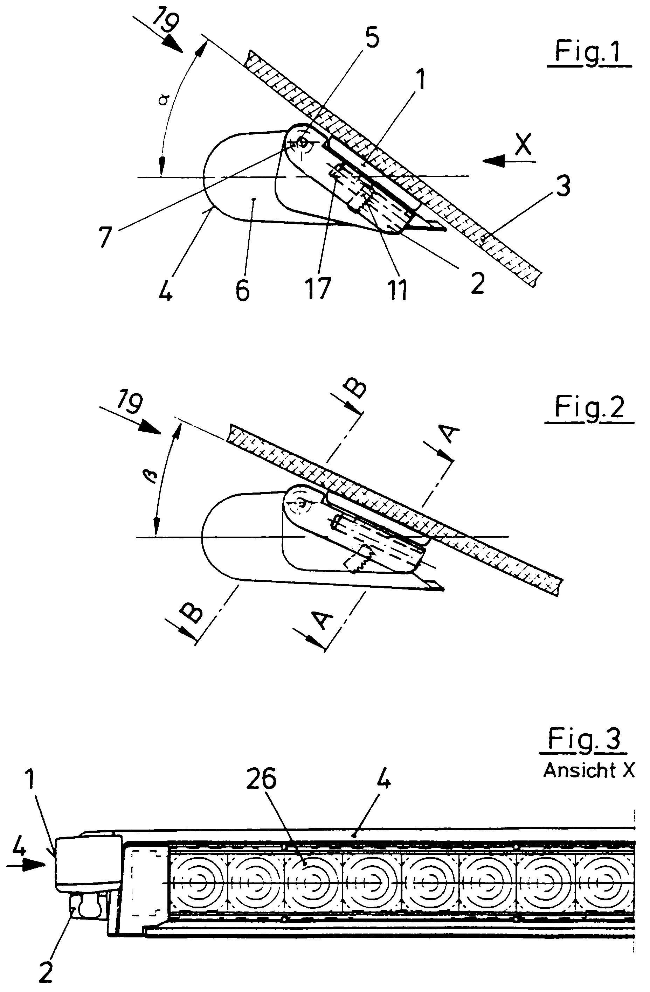

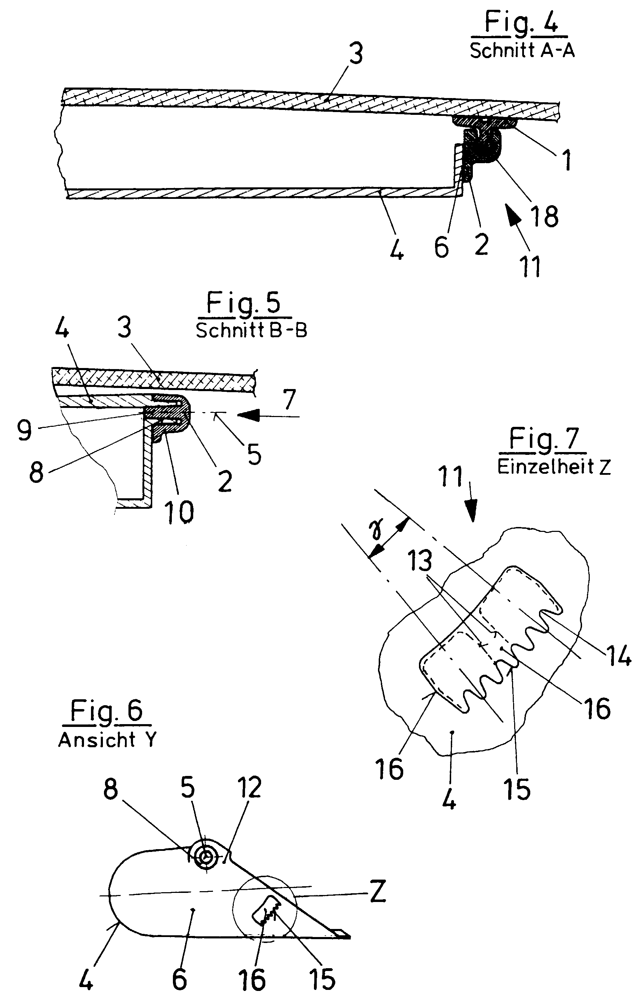

Die Fahrzeugleuchte weist eine flache und langgestreckte Lichtleiste (26) auf. Die Lichtleiste (26) besteht aus einer vorderen Lichtscheibe, welche an einer nicht dargestellten Leiterplatte mit Leuchtdioden befestigt ist. Die Lichtleiste (26) ist in ein aus Kunststoff bestehendes rinnenförmiges Gehäuse (4) eingepaßt. Die obere Seitenwand des Gehäuses (4) ist quer zu seiner Längsausdehnung kürzer als seine untere Seitenwand ausgeführt. Die sich abgewandten kurzen Seitenflächen (6) des Gehäuses (4) sind eben ausgeführt und dienen als Anlagefläche für die zweiten Halteelemente (2). Die zweiten Halteelemente (2) sind durch eine erste und zweite Nut-Feder-Verbindung (7, 11) mit dem Gehäuse (4) fügbar. Die Fügerichtung verläuft in Längsausdehnung des Gehäuses (4). Die beiden ersten Nut-Feder-Verbindungen (7) bilden zusammen eine Achse (5), welche am oberen Randabschnitt (12) des Gehäuses (4) verläuft. Die erste Nut-Feder-Verbindung (7) weist eine von der kurzen Seitenfläche (6) des Gehäuses (4) abstehende Drehhülse (8) auf, in welcher das zweite Halteelement (2) mit einem Drehzapfen (9) eingesteckt ist. Der Drehzapfen (9) ist in einer zylinderförmigen Vertiefung (10) des zweiten Halteelementes (2) angeordnet. In die zylinderförmige Vertiefung (10) greift die Drehhülse (8) mit ihrer zylindrischen Mantelfläche mit kleinem Spiel ein. Die zweite Nut-Feder-Verbindung (11) ist möglichst nahe dem vorderen unteren Randabschnitt (27) des Gehäuses (4) angeordnet und besteht aus einem an das zweite Halteelement (2) angeformten Nocken (13) und einer die Seitenfläche (6) aufweisenden Seitenrand eingebrachte Öffnung (16). Die zweiten Halteelemente (2) sind zu der Achse (5) zwischen dem Winkel in mehreren Drehstellungen mit dem Gehäuse (4) fügbar. Nach dem Fügen greift der Nocken (16) des zweiten Halteelements (2) mit einer profilierten Seitenfläche (14) in eine profilierte Seitenfläche (15) der Öffnung (16) ein. In Figur 7 sind die beiden möglichen Endstellungen der zweiten Halteelemente (2) an dem Gehäuse (4) gezeigt. In Figur 1 ist das zweite Halteelement (2) in der einen Endstellung dargestellt, wobei der Neigungswinkel der Heckscheibe (3) zur Fahrzeuglängsachse der Winkel ist. In Figur 2 ist das zweite Halteelement (2) in der anderen Endstellung dargestellt und zwischen der Heckscheibe (3) und der Fahrzeuglängsrichtung besteht der Winkel β.

Der Winkel α minus dem Winkel β ergibt den Winkel 8 . Die profilierte Seitenfläche des Nockens (13) weist drei Zähne auf, während die profilierte Seitenfläche (15) der Öffnung (16) sieben Zwischenräume für die Zähne des Nockens (13) aufweist. Somit bestehen für die zweiten Halteelemente (2) fünf Einstellwinkel.

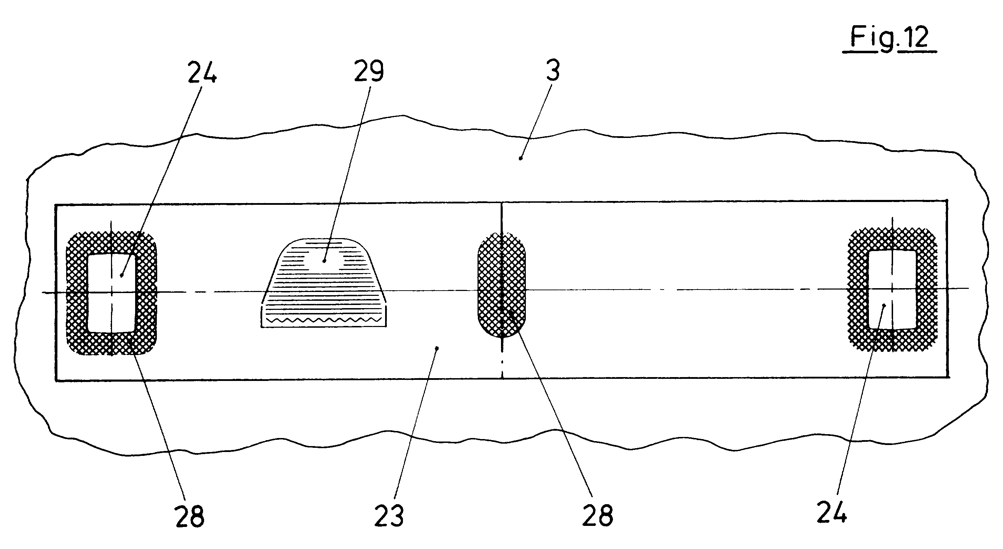

Die ersten Halteelemente (1) weisen einen rechteckförmigen Haltefuß (25) und ein stiftartiges Steckelement (18) auf. Der Haltefuß (25) jedes ersten Halteelementes (1) weist eine ebene Unterseite auf, welche als Klebefläche dient. Der Haltefuß ist mittels Klebstoff an der Innenseite der Heckscheibe anklebbar. Hierbei ist es vorteilhaft, wenn zuerst die in Figur 12 dargestellte elastische Schablone an die Innenseite der Heckscheibe (3) an eine für die Fahrzeugleuchte geeignete Stelle anzukleben. Die Schablone (22) ist ein rechteckförmiger Streifen und weist zentral und an beiden Endabschnitten einen Klebebereich (28) auf. An den Endabschnitten der rechteckförmigen Schablone (22) umgeben die Klebebereiche (28) einen Freischnitt (24) der Schablone (22). Die Freimachungen (24) sind rechteckförmig ausgeführt und entsprechen in ihren Außenabmessungen den rechteckförmigen Haltefüßen (25) der ersten Halteelemente (1). Nach einem Ankleben der Schablone (22) an die Innenseite der Heckscheibe (3) sind die Freimachungen (24) mit Klebstoff auszufüllen. Der Klebstoff ist mit einem Spachtel (29), welcher aus der Schablone (22) herauszubrechen ist, glattzuziehen. Danach können die ersten Halteelemente (1) mit ihren Haltefüßen (25) in die mit Klebstoff ausgefüllten Freimachungen (24) eingedrückt werden. Somit dienen die Freimachungen (24) sowohl der Portionierung des Klebstoffes als auch zur Fixierung der ersten Halteelemente (1). Nach einem Abbinden des Klebstoffes ist die Schablone von der Heckscheibe (3) anzuziehen und es verbleibt eine saubere Klebeverbindung zwischen der Heckscheibe (3) und den ersten Halteelementen (1).

Nach dem Ankleben der ersten Halteelemente (1) an die Heckscheibe (3) weisen die stiftartigen Steckelemente (18) mit ihrem freien Ende nach oben. Das stiftartige Steckelement (18) weist an seinem nach oben weisenden Endabschnitt auf sich gegenüberliegenden Seiten eine Rastwarze (20) auf. Der nach unten gerichtete Endabschnitt (22) des stiftartigen Steckelementes (18) verjüngt sich konisch nach oben hin. Das stiftartige Steckelement (18) ist im Bereich des Endabschnitts (22) über einen Steg (30) mit dem Haltefuß (25) verbunden. Die zweiten Halteelemente (2) sind mit einem geschlitzten Sacklock (17) auf das stiftartige Steckelement (18) des ersten Halteelementes (1) aufgeschoben. Durch den Schlitz des Sackloches (17) führt der Steg (30) hindurch. Das Sackloch verjüngt sich zu seinem Boden hin konisch und verläuft mit seiner Mittelachse in einem spitzen Winkel δ zur Fügerichtung (19) zwischen dem ersten und zweiten Halteelement (1, 2). Die Verbindung zwischen dem zweiten und ersten Halteelement (1, 2) ist klapperfrei, da das Sackloch (17) konisch und unter dem Winkel δ verläuft und das stiftartige Steckelement (18) die Rastwarzen (20) und den konischen Endabschnitt (22) aufweisen. Die Rastwarzen (20) greifen nach dem Einführen des Steckelements (18) in das Sackloch (17) in einer von einem Querloch gebildeten Hinterschneidung (21) selbstrastend ein. Um die Montage zu erleichtern, können die zweiten Halteelemente (2) vor dem Fügen des Gehäuses (4) mit den ersten Halteelementen (1) an den Seitenflächen (6) des Gehäuses (4) angeklebt werden.

### Bezugszeichenliste

### Fahrzeugleuchte, insbesondere zusätzliche Bremsleuchte

- 1: erstes Halteelement
- 2: zweites Halteelement
- 3: Heckscheibe
- 4: Gehäuse
- 5: Achse
- 6: kurze Seitenfläche
- 7: erste Nut-Feder-Verbindung
- 8: Drehhülse
- 9: Drehzapfen
- 10: Vertiefung
- 11: zweite Nut-Feder-Verbindung
- 12: oberer Randabschnitt
- 13: Nocken
- 14, 15: profilierte Seitenfläche
- 16: Öffnung
- 17: Sackloch
- 18: stiftartiges Steckelement
- 19: Einsetzrichtung
- 20: Rastwarzen
- 21: Hinterschneidung
- 22: Endabschnitt
- 23: Schablone
- 24: Freimachungen
- 25: Haltefuß
- 26: Lichtleiste
- 27: unterer Randabschnitt
- 28: Klebebereich
- 29: Spachtel
- 30: Steg

## Patentansprüche

1. Fahrzeugleuchte, insbesondere zusätzliche Bremsleuchte, welche mit Halteelementen (1, 2) an der Innenseite einer Heckscheibe (3) eines Fahrzeuges anbringbar ist, mit einem flachen und langgestreckten Gehäuse (4), mit mindestens einer in dem Gehäuse (4) angeordneten Lichtquelle, mit zwei an der Innenseite der Heckscheibe (3) befestigbaren ersten Halteelementen (1), zwischen welchen das langgestreckte Gehäuse (4) verläuft und mit welchen das Gehäuse (4) quer zu seiner Längsausdehnung fügbar ist, wobei zwei zweite Halteelemente (2) sowohl in mehreren Drehstellungen zu einer in Längsausdehnung des Gehäuses (4) verlaufenden Achse (5) in Richtung der Achse (5) mit dem Gehäuse (4) drehfest als auch zusammen mit dem Gehäuse (4) quer zur Achse (5) mit den ersten Halteelementen (1) fügbar sind, dadurch gekennzeichnet, dass die zwei ersten Halteelemente (1) jeweils ein Befestigungselement (17) aufweisen und daß die zwei zweiten Halteelemente (2) jeweils ein Befestigungselement (18) aufweisen, wobei die zwei zweiten Halteelemente (2) zusammen mit dem Gehäuse (4) quer zur Achse (5) mit den ersten Halteelementen (1) durch die Befestigungselemente (17, 18) fügbar sind.

2. Fahrzeugleuchte nach Anspruch 1, dadurch gekennzeichnet, daß die zweiten Halteelemente (2) an kurzen Seitenflächen (6) des langgestreckten Gehäuses (4) flächig anlegbar sind.

3. Fahrzeugleuchte nach Anspruch 1 oder 2, dadurch gekennzeichnet, daß die Achse (5) durch jeweils eine erste Nut-Feder-Verbindung (7) zwischen den zweiten Halteelementen (2) und dem Gehäuse (4) gebildet ist.

4. Fahrzeugleuchte nach Anspruch 3, dadurch gekennzeichnet, daß die erste Nut-Feder-Verbindung (7) eine Drehhülse (8) aufweist, welche mit einem Drehzapfen (9) und einer den Drehzapfen (9) umgebenden Vertiefung (10) gefügt ist.

5. Fahrzeugleuchte nach Anspruch 1, dadurch gekennzeichnet, daß in einem Abstand zur Achse zwischen den zweiten Halteelementen (2) und dem Gehäuse (4) eine zweite Nut-Feder-Verbindung (11) besteht, welche die zweiten Halteelemente (2) in ihrer jeweiligen Drehstellung drehfest mit dem Gehäuse (4) verbindet.

6. Fahrzeugleuchte nach Anspruch 5, dadurch gekennzeichnet, daß die Achse (5) am oberen äußeren Randabschnitt (12) des Gehäuses (4) verläuft, während die zweite Nut-Feder-Verbindung (11) unterhalb der Achse (5) angeordnet ist.

7. Fahrzeugleuchte nach Anspruch 5, dadurch gekennzeichnet, daß die zweite Nut-Feder-Verbindung (11) einen Nocken (13) mit profilierter Seitenfläche (14) aufweist, welche in jeder Drehstellung des zweiten Halteelementes (2) in eine entsprechend profilierte Seitenfläche (15) einer Öffnung (16) eingreift.

8. Fahrzeugleuchte nach Anspruch 1, dadurch gekennzeichnet, daß das zweite Halteelement (2) auf der der Heckscheibe (3) zugewandten Seite ein geschlitztes Sackloch (17) aufweist, welches sich zu seinem Boden hin verjüngt und ein stiftartiges Steckelement (18) aufnimmt, welches klemmend in dem Sacklock (17) festsetzbar ist.

9. Fahrzeugleuchte nach Anspruch 8, dadurch gekennzeichnet, daß das stiftartige Steckelement (18) an dem in Einsetzrichtung (19) des Gehäuses (4) gerichteten Endabschnitt mindestens eine Rastwarze (20) aufweist, welche in eine Hinterschneidung (21) des Sackloches (17) selbstrastend eingreift und mit dem anderen Endabschnitt (22) sich in Einsetzrichtung verjüngt.

10. Fahrzeugleuchte nach Anspruch 8 oder 9, dadurch gekennzeichnet, daß das Sackloch (17) des zweiten Halteelementes (2) und/oder das stiftartige Steckelement (18) des ersten Halteelements (1) in einem spitzen Winkel δ zur Einsetzrichtung des Gehäuses (4) verläuft.

11. Fahrzeugleuchte nach einem der Ansprüche 1 - 10, dadurch gekennzeichnet, daß die ersten Halteelemente (1) mit Klebstoff an der Innenseite der Heckscheibe (3) mittels einer an die Heckscheibe (3) anlegbaren Schablone (23) festlegbar ist, welche mit zwei Freimachungen (24) zur Aufnahme von Klebstoff und Haltefüßen (25) der ersten Halteelemente (1) versehen ist.

## Claims

1. A vehicle lamp, especially an additional brake light, which can be secured to the interior side of a rear window (3) of a vehicle by means of retaining elements (1, 2), with a flat and elongate housing (4), with at least one light source arranged in the housing (4), with 2 first retaining elements (1) which can be fixed to the interior side of the rear window (3), between which the elongate housing (4) extends and by means of which the housing (4) can be joined transversely to its longitudinal extension, wherein the 2 second retaining elements (2) can be joined to the first retaining elements (1) both in a plurality of pivot positions relative to an axis (5) extending in the longitudinal extension of the housing (4) in the direction of the axis (5) together with the housing in a torsionally-rigid manner and together with the housing transversely to the axis (5), characterised in that the 2 first retaining elements (1) each have a securing element (17) and that the 2 second retaining elements (2) each have a securing element (18), wherein the 2 second retaining elements (2) together with the housing (4) transverse to the axis (5) can be connected to the first retaining elements (1) through the securing elements (17, 18).

2. A vehicle lamp according to claim 1, characterised in that the second retaining element (2) can be laid flatly against short side faces (6) of the elongate housing (4).

3. A vehicle lamp according to claim 1 or 2, characterised in that the axis (5) is formed through a first tongue and groove connection (7) between the second retaining elements (2) and the housing (4).

4. A vehicle lamp according to claim 3, characterised in that the first tongue and groove connection (7) has a pivot sleeve (8) which is joined to a pivot pin (9) and a recess (10) surrounding the pivot pin (9).

5. A vehicle lamp according to claim 1 characterised in that a second tongue and groove connection (11) is arranged at a distance from the axis between the second retaining elements (2) and the housing (4) and serves to connect the second retaining elements (2) in their respective pivot positions to the housing (4) in a rotationally-rigid manner.

6. A vehicle lamp according to claim 5, characterised in that the axis (5) extends along the upper outer edge section (12) of the housing (4), whilst the second groove and tongue connection (11) is arranged beneath the axis (5).

7. A vehicle lamp according to claim 5, characterised in that the second groove and tongue connection (11) has a cam (13) with a profiled side surface (14) which engages in a correspondingly-profiled side surface (15) of an opening (16) in every pivot position of the second retaining element (2).

8. A vehicle lamp according to claim 1, characterised in that the second retaining element (2) has a slotted blind hole (17) on the side facing the rear window (3), which tapers towards its base and accommodates a pin-like plug-in element (18) which can be fixed in the blind hole (17) in a jamming manner.

9. A vehicle lamp according to claim 8, characterised in that the pin-like plug-in element (18) has at least one snap-in lug (20) on the end section facing the insert direction (19) of the housing (4), with the said snap-in lug (20) engaging in an undercut (21) of the blind hole (17) in a self-locking manner and with its other end section (22) tapering in the insertion direction.

10. A vehicle lamp according to claim 8 or 9, characterised in that the blind hole (17) of the second retaining element (2) and/or the pin-like plug-in element (18) of the first retaining element (1) extend at an acute angle δ to the direction of insertion of the housing (4).

11. A vehicle lamp according to one of claims 3 - 10, characterised in that the first retaining element (1) can be fixed to the inner side of the rear window (3) by means of a template (23) which can be laid against the rear window (3), with the said template (23) provided with 2 clear areas (24) to take up adhesive and the retaining feet (25) of the first retaining element (1).

## Revendications

1. Feu de véhicule, en particulier feu stop additionnel, qui est susceptible d'être monté avec des éléments de retenue (1, 2) sur la face intérieure d'une lunette arrière (3) d'un véhicule, comportant un boîtier (4) plat et allongé, au moins une source lumineuse agencée dans le boîtier (4), deux premiers éléments de retenue (1) susceptibles d'être fixés sur la face intérieure de la lunette arrière, entre lesquels s'étend le boîtier (4) allongé et avec lesquels le boîtier (4) est susceptible d'être assemblé transversalement à son extension longitudinale, deux seconds éléments de retenue (2) étant susceptibles d'être assemblés non seulement de manière solidaire en rotation avec le boîtier (4) dans plusieurs positions de rotation par rapport à un axe (5) s'étendant en extension longitudinale du boîtier (4) en direction de l'axe (5), mais aussi conjointement avec le boîtier (4) transversalement à l'axe (5) avec les premiers éléments de retenue (1), caractérisé en ce que les deux premiers éléments de retenue (1) présentent chacun un élément de fixation (17) et en ce que les deux seconds éléments de retenue (2) présentent chacun un élément de fixation (18), les deux seconds éléments de retenue (2) étant susceptibles d'être assemblés au moyen des éléments de fixation (17, 18), conjointement avec le boîtier (4) transversalement à l'axe (5), avec les premiers éléments de retenue (1).

2. Feu de véhicule selon la revendication 1, caractérisé en ce que les seconds éléments de retenue (2) sont susceptibles d'être appliqués à plat sur des petites surfaces latérales (6) du boîtier allongé (4)

3. Feu de véhicule selon l'une ou l'autre des revendications 1 et 2, caractérisé en ce que l'axe (5) est formé par une première liaison à languette-et-rainure (7) entre les seconds éléments de retenue (2) et le boîtier (4).

4. Feu de véhicule selon la revendication 3, caractérisé en ce que la première liaison à languette-et-rainure (7) présente une douille rotative (8) qui est assemblée avec un pivot (9) et un renfoncement (10) entourant le pivot (9).

5. Feu de véhicule selon la revendication 1, caractérisé en ce qu'à une distance de l'axe entre les deux seconds éléments de retenue (2) et le boîtier (4) se trouve une seconde liaison à languette-et-rainure (7) qui relie les seconds éléments de retenue (2) de manière solidaire en rotation avec le boîtier (4), dans leur position de rotation respective.

6. Feu de véhicule selon la revendication 5, caractérisé en ce que l'axe (5) s'étend sur le tronçon de bordure (12) supérieur extérieur du boîtier (4) tandis que la seconde liaison à languette-et-rainure (11) est agencée en dessous de l'axe (5).

7. Feu de véhicule selon la revendication 5, caractérisé en ce que la seconde liaison à languette-et-rainure (11) présente une came (13) à surface latérale (14) profilée qui, dans chaque position de rotation du second élément de retenue (2), s'engage dans une surface latérale (15) à profil correspondant d'une ouverture (16).

8. Feu de véhicule selon la revendication 1, caractérisé en ce que le second élément de retenue (2) présente sur le côté orienté vers la lunette arrière (3) un trou borgne (17) fendu qui se rétrécit vers son fond et qui reçoit un élément d'enfichage en forme de pointe (18) qui est susceptible d'être fixé par coincement dans le trou borgne (17).

9. Feu de véhicule selon la revendication 8, caractérisé en ce que l'élément d'enfichage en forme de pointe (18) présente sur le tronçon d'extrémité orienté en direction de mise en place (19) du boîtier (4) au moins un téton d'enclenchement qui s'engage par auto-enclenchement dans une contre-dépouille (21) du trou borgne (17) et qui se rétrécit avec l'autre tronçon d'extrémité (22) dans la direction de mise en place.

10. Feu de véhicule selon l'une ou l'autre des revendications 8 et 9, caractérisé en ce que le trou borgne (17) du second élément de retenue (2) et/ou l'élément d'enfichage en forme de pointe (18) du premier élément de retenue (1) s'étend sous un angle aigu δ par rapport à la direction de mise en place du boîtier (4).

11. Feu de véhicule selon l'une quelconque des revendications 1 à 10, caractérisé en ce que les premiers éléments de retenue (1) sont susceptibles d'être fixés avec de la colle sur la face intérieure de la lunette arrière (3) au moyen d'un gabarit (23) susceptible d'être appliqué sur la lunette arrière (3), lequel est pourvu de deux dégagements (24) pour recevoir de la colle et des pieds de retenue (25) des premiers éléments de retenue (1).
